# EUROPÄISCHE PATENTSCHRIFT

(11) **EP 3 560 728 B1**
(45) Veröffentlichungstag und Bekanntmachung des Hinweises auf die Patenterteilung: **01.05.2024**
(21) Anmeldenummer: 18169936.4
(22) Anmeldetag: 27.04.2018
(51) Int. Cl.: B60B 3/16, B60B 27/00, B60B 27/02

(54) **RADFLANSCH UND ZUR BEFESTIGUNG EINES RADES AN EINER NUTZFAHRZEUGACHSE MIT EINEM SOLCHEN RADFLANSCH AUSGESTATTETE NUTZFAHRZEUGACHSE**
WHEEL FLANGE AND COMMERCIAL VEHICLE AXLE DESIGNED FOR CONNECTING A WHEEL TO A COMMERCIAL VEHICLE AXLE
BRIDE DE ROUE ET ESSIEU DE VÉHICULE UTILITAIRE APPROPRIÉ À FIXER UNE ROUE SUR UN ESSIEU DE VÉHICULE UTILITAIRE DOTÉ D'UNE TELLE BRIDE DE ROUE

(43) Veröffentlichungstag der Anmeldung: 30.10.2019
(73) Patentinhaber: Schmitz Cargobull AG, 48341 Altenberge (DE)
(72) Erfinder: Sommer, Bernd, 99867 Gotha (DE); Schröder, Stephan, 59425 Unna (DE)
(74) Vertreter: Cohausz & Florack

(56) Entgegenhaltungen:
- EP-A2- 0 865 941
- DE-A1- 10 133 985
- DE-A1- 10 241 867
- DE-A1- 19 704 353

## Beschreibung

Die Erfindung betrifft einen Radflansch zur Befestigung eines Rades an einer Nutzfahrzeugachse.

Ein solcher Radflansch ist beispielsweise aus der DE 102 41 867 A1 bekannt.

Dabei dienen Radlagerflansche der hier in Rede stehenden Art als Zwischenelement, über das die Felge des jeweiligen Rads mit dem zugeordneten, von der Achse getragenen Radlager angebunden wird. Zusätzlich kann an den Radflansch auch die Bremsscheibe einer Scheibenbremse angebunden sein, die zum Abbremsen des an dem Radflansch befestigten Rads vorgesehen ist.

Dementsprechend ist der jeweilige Radflansch im Gebrauch mittels eines Radlagers um eine Drehachse drehbar gelagert, die mit der zentralen Längsachse des Radflansches zusammenfällt. Dabei umfasst der Radflansch einen um seine zentrale Längsachse umlaufenden, an den äußeren Umfang des Radflansches angrenzenden Ringabschnitt, in den sich längs der zentralen Längsachse erstreckende Radschraubenöffnungen eingeformt sind. Darüber hinaus weist der Radflansch einen um die zentrale Längsachse umlaufenden inneren Ringabschnitt auf, dessen Durchmesser kleiner ist als der Durchmesser des äußeren Ringabschnitts und in den sich längs der zentralen Längsachse des Radflansches erstreckende Radlagerschraubenöffnungen eingeformt sind, wobei sich zwischen dem äußeren Ringabschnitt und dem inneren Ringabschnitt des Radflansches ein Übergangsabschnitt erstreckt, in den sich längs der zentralen Längsachse erstreckende Belüftungsöffnungen eingeformt sind.

Den Radlagerschraubenöffnungen des Radflansches sind in die Stirnseite des äußeren Laufrings des jeweiligen Radlagers eingeformte Gewindeöffnungen zugeordnet. Zur Befestigung des Radflansches an dem Radlager werden Radlagerschrauben mit ihrem Gewindeschaft von der der Umgebung zugewandten und vom jeweiligen Radlager abgewandten Außenseite des Radflansches her durch die Radlagerschraubenöffnungen gesteckt und in die jeweils zugeordnete Gewindeöffnung des äußeren Laufrings des Radlagers geschraubt, bis ihr Schraubenkopf an der äußeren Fläche des inneren Ringabschnitts anliegt. Da einerseits die Radlagerschrauben hohe Kräfte übertragen müssen, andererseits die Radlagerschraubenöffnungen aufgrund der vergleichbar geringen Breite des inneren Ringabschnitts und der Stirnseite des zugeordneten äußeren Laufrings des Radlagers nur einen begrenzten Öffnungsdurchmesser haben können, ist eine vergleichbar große Zahl von Radlagerschrauben erforderlich, um die ordnungsgemäße Befestigung und sichere Kraftübertragung zu gewährleisten. Typischerweise werden heutzutage zwölf in gleichmäßigen Winkelabständen um die Längsachse des Radflansches verteilte Radlagerschraubenöffnungen vorgesehen.

Die Befestigung der Felge des jeweiligen Rades an dem Radflansch erfolgt durch Radschrauben oder Radbolzen. Soll am Radflansch nicht nur ein Rad, sondern auch eine Bremsscheibe oder eine Bremstrommel angebunden werden, so liegt dazu beispielsweise die Bremsscheibe üblicherweise mit der Stirnseite ihres den Reibring der Bremsscheibe tragenden Bremsscheibentopfes oder an der dem Radlager zugewandten Rückseite des äußeren Ringabschnitts an. In den Bremsscheibentopf sind dabei ebenfalls Radschraubenöffnungen eingeformt, die bei am äußeren Ringabschnitt des Radflansches sitzender Bremsschreibe fluchtend zu den Radschraubenöffnungen des Radflansches ausgerichtet sind. Zur Befestigung werden die Radschrauben mit ihrem Gewindeschaft von der Rückseite des Radflansches her durch die jeweilige Radschraubenöffnung von Radflansch und gegebenenfalls Bremsscheibentopf gesteckt, bis der Kopf der Radschraube an der rückseitigen Oberfläche des äußeren Ringabschnitts oder des Bremsscheibentopfs sitzt und die Radschrauben mit ihren Gewindeschäften über die äußere Seite des äußeren Randabschnitts des Radflansches hinausstehen. In einen inneren Ringabschnitt der Felge des an dem Radflansch zu montierenden Rads sind entsprechend den Radschraubenöffnungen des Radflansches geformte und ausgerichtete Radschraubenöffnungen eingeformt, so dass das zu befestigende Rad mit seiner Felge auf die Gewindeschäfte der Radschrauben aufgeschoben werden kann. Anschließend werden von der vom Radflansch abgewandten Außenseite der Radfelge her jeweils eine Radmutter auf die durch die Radschraubenöffnungen der Felge greifenden Gewindeschäfte aufgeschraubt. In vergleichbarer, ebenfalls bekannter Weise erfolgt die Befestigung einer Bremstrommel, wenn die jeweilige Fahrzeugachse nicht mit einer Scheiben-, sondern einer Trommelbremse ausgestattet werden soll.

Um einen einfachen Austausch von Felgen unterschiedlicher Hersteller zu gewährleisten, sind die Anzahl, die Verteilung und Größe der Radschraubenöffnungen der Radfelgen von Nutzfahrzeugen und damit einhergehend die Anzahl der Radschraubenöffnungen der Radflansche in der deutschen Norm DIN 74361-3 festgelegt. So sind nach heutigem Stand zehn in gleichen Winkelabständen um die jeweilige Längsachse des Radflansches verteilte Radschraubenöffnungen vorgeschrieben.

Über die Belüftungsöffnungen in den zwischen dem inneren und dem äußeren Ringabschnitt vorgesehenen Übergangsabschnitt wird eine ausreichende Belüftung der auf der Rückseite des Radflansches angeordneten Bauteile gewährleistet. So stellen die Belüftungsöffnungen sicher, dass ein für den Abtransport von Wärme aus dem Bereich des Radlagers auch dann gesichert ist, wenn eine dort vorgesehene Bremsscheibe bei einer Bremsung hohe Temperaturen annimmt und das Radlager einer entsprechend hohen Wärmestrahlung ausgesetzt ist.

Im modernen Fahrbetrieb werden immer höhere Anforderungen an die vom Radlager aufzunehmenden Belastungen gestellt. Gleichzeitig besteht der Wunsch nach Achskonstruktionen, bei denen die bewegten Massen auf engstem Raum angeordnet sind mit dem Ergebnis, dass Bremsscheibe und Radlager räumlich eng zusammenrücken. Die Folge der höheren Belastungen einerseits und der engeren räumlichen Anordnung andererseits ist die Gefahr einer erhöhten thermischen Belastung, denen die Radlager im Betrieb ausgesetzt sind.

Vor diesem Hintergrund hat sich die Aufgabe ergeben, einen Radflansch zu schaffen, der einerseits ein gegenüber konventionellen Radflanschen der hier in Rede stehenden Art reduziertes Gewicht besitzt und der andererseits eine optimierte Belüftung des Radlagers ermöglicht, an dem er im Gebrauch befestigt ist.

Genauso sollte eine Nutzfahrzeugachse angegeben werden, die optimierte Gebrauchseigenschaften auch unter hohen Belastungen aufweist.

In Bezug auf den Radflansch hat die Erfindung diese Aufgabe dadurch gelöst, dass ein solcher Radflansch mindestens die in Anspruch 1 angegebenen Merkmale aufweist.

Bei einer die voranstehend angegebene Aufgabe lösenden Achse für ein Nutzfahrzeug, die einen Endabschnitt aufweist, auf der ein Radlager sitzt, ist an dem äußeren Laufring des Radlagers ein erfindungsgemäß ausgebildeter Radflansch mittels Radlagerverschraubungen befestigt, von denen jeweils eine durch eine der Radlagerschraubenöffnungen des Radflansches geführt ist, so dass der Radflansch an der Achse um eine mit seiner zentralen Längsachse zusammenfallenden Drehachse drehbar gelagert ist.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßer Radflansch zur Befestigung eines Rades an einer Nutzfahrzeugachse, an der der Radflansch im Gebrauch mittels eines Radlagers um eine Drehachse drehbar gelagert ist, die mit der zentralen Längsachse des Radflansches zusammenfällt, weist demnach in Übereinstimmung mit dem eingangs erläuterten Stand der Technik
- einen um die zentrale Längsachse umlaufenden, an den äußeren Umfang des Radflansches angrenzenden Ringabschnitt, in den sich längs der zentralen Längsachse erstreckende Radschraubenöffnungen eingeformt sind,
- einen um die zentrale Längsachse umlaufenden inneren Ringabschnitt, dessen Durchmesser kleiner ist als der Durchmesser des äußeren Ringabschnitts und in den sich längs der zentralen Längsachse erstreckende Radlagerschraubenöffnungen eingeformt sind, und
- einen um die zentrale Längsachse umlaufenden Übergangsabschnitt auf, der sich zwischen dem äußeren Ringabschnitt und dem inneren Ringabschnitt erstreckt, wobei in den Übergangsabschnitt sich längs der zentralen Längsachse erstreckende Belüftungsöffnungen eingeformt sind.

Erfindungsgemäß ist nun bei einem solchen Radflansch in einer Projektion auf eine normal zur zentralen Längsachse ausgerichteten Ebene
- im Fall, dass die Anzahl der Radschraubenöffnungen größer als die oder gleich der Anzahl der Radlagerschraubenöffnungen ist, jeder
   Radlagerschraubenöffnung eine Radschraubenöffnung zugeordnet, wobei die Mittelpunkte der einander zugeordneten Radlagerschraubenöffnung und Radschraubenöffnung gemeinsam auf einer gedachten, von der zentralen Längsachse ausgehenden Verbindungsgeraden angeordnet sind,
- im Fall, dass die Anzahl der Radlagerschraubenöffnungen größer als die Anzahl der Radschraubenöffnungen ist, jeder Radschraubenöffnung eine Radlagerschraubenöffnung zugeordnet, wobei die Mittelpunkte der einander zugeordneten Radlagerschraubenöffnungen und Radschraubenöffnungen gemeinsam auf einer gedachten, von der zentralen Längsachse ausgehenden Verbindungsgeraden angeordnet sind,
- wobei die Belüftungsöffnungen jeweils in einem von zwei benachbarten Verbindungsgeraden begrenzten Bereich des Übergangsabschnitts angeordnet sind.

Bei einem erfindungsgemäßen Radflansch sind die Radschraubenöffnungen seines äußeren Ringabschnitts und die Radlagerschraubenöffnungen seines inneren Ringabschnitts somit derart angeordnet, dass bei einer Anzahl von Radlagerschraubenöffnungen, die kleiner oder gleich der Anzahl der Radschraubenöffnungen sind, für jede Radlagerschraubenöffnung eine Radschraubenöffnung gefunden werden kann, deren Mittelpunkt mit dem Mittelpunkt der betreffenden Radlagerschraubenöffnung auf einer Geraden liegt, die die Längsachse des Radflansches schneidet. Genauso kann im Fall, dass bei einem erfindungsgemäßen Radflansch die Anzahl der Radschraubenöffnungen kleiner ist als die Anzahl der Radlageröffnungen, jeder Radschraubenöffnung eine Radlagerschraubenöffnung zugeordnet werden, deren Mittelpunkt mit dem Mittelpunkt der betreffenden Radschraubenöffnung auf einer die Längsachse des Radflansches schneidenden Geraden liegt.

Die sich so ergebende sternförmige, in Bezug auf die Längsachse punktsymmetrische Anordnung der nach Maßgabe der Erfindung bei einem erfindungsgemäßen Radflansch gebildeten Paare von Radschraubenöffnungen und Radlagerschraubenöffnungen erlaubt es, die im Übergangsbereich des Radflansches vorgesehenen Belüftungsöffnungen maximal zu vergrößern. So können sich die Belüftungsöffnungen insbesondere bis in den Bereich des inneren Ringabschnitts erstrecken, wenn die Anzahl der Radschraubenöffnungen größer oder gleich der Anzahl der Radlagerschraubenöffnungen ist.

Gleichzeitig gibt die nach Maßgabe der Erfindung gestaltete Geometrie eines Radflansches die Möglichkeit, die die Belüftungsöffnungen im Übergangsabschnitt jeweils seitlich begrenzenden, sich in radialer Richtung erstreckenden stegartigen Bereiche so zu legen, dass sie die auf ihnen im Gebrauch lastenden Kräfte optimal aufnehmen können. Dies erlaubt es, die betreffenden Bereiche nach Art von Speichen oder Rippen besonders filigran und damit gewichtssparend zu formen, wobei die filigrane Gestalt gleichzeitig eine maximale Größe der Belüftungsöffnungen ergibt. Hierbei erweist es sich als besonders zweckmäßig, wenn die Radschraubenöffnungen und/oder die Radlagerschraubenöffnungen jeweils in gleichmäßigen Winkelabständen um die zentrale Längsachse verteilt angeordnet sind. Dies gilt insbesondere dann, wenn bei einem erfindungsgemäßen Radflansch die Anzahl der Radschraubenöffnungen gleich der Anzahl der Radlagerschraubenöffnungen ist.

Eine hinsichtlich der Ausdehnung der Belüftungsöffnungen einerseits und hinsichtlich der Materialersparnis und damit einhergehenden Gewichtsreduzierung andererseits optimierte Gestaltung eines erfindungsgemäßen Radflansches kann dadurch erreicht werden, dass der innere Ringabschnitt bezogen auf die zentrale Längsachse radial in Richtung des äußeren Umfangs des Radflansches ausgesetzte Vorsprünge aufweist, in deren Bereich jeweils eine der Radlagerschraubenöffnungen eingeformt ist. Bei dieser Ausgestaltung sind also die Radlagerschraubenöffnungen jeweils in nach Art von Vorsprüngen radial nach außen vorstehenden Bereichen ausgebildet, von denen benachbarte Vorsprungsbereiche über jeweils einen Ringsegmentbereich des inneren Ringabschnitts verbunden sind. Die in radialer Richtung gemessene Breite der betreffenden Ringsegmentbereiche kann dabei sehr viel schmaler sein als die der Vorsprünge, in denen jeweils eine Radlagerschraubenöffnung eingeformt ist, so dass sich die Belüftungsöffnungen in den zwischen den Vorsprüngen jeweils freien Raum erstrecken können, der nicht für die Ringsegmentbereiche des inneren Ringabschnitts benötigt wird. Dabei ergibt sich eine optimale Formsteifigkeit und Belastbarkeit auch eines derart filigran gestalteten Radflansches, wenn die Vorsprünge, in die jeweils eine der Radlagerschraubenöffnungen eingeformt ist, durch das dem inneren Ringabschnitt zugeordnete Ende von jeweils einer Rippe gebildet sind, die sich über den Übergangsabschnitt bis zum äußeren Ringabschnitt erstreckt.

Auch bei einem erfindungsgemäßen Radflansch kann, wie bei konventionellen Radflanschen üblich, der innere Ringabschnitt eine sich längs der zentralen Längsachse erstreckende zentrale Öffnung des Radflansches umgrenzen, um beispielsweise auch noch bei montiertem Rad einen Zugang zum Radlager oder zur das Radlager tragenden Achse zu ermöglichen.

Um die Montage der Felge des jeweils zu montierenden Rades an einem erfindungsgemäßen Radflansch zu erleichtern, können auch dort in an sich bekannter Weise am inneren um die zentrale Längsachse umlaufenden Umfangsrand des äußeren Ringabschnitts sich längs der zentralen Längsachse erstreckende Zentriervorsprünge ausgebildet sein, die als Ausrichthilfen für die Montage des Rads an dem Radflansch dienen.

Abhängig von der Gestalt der Stirnfläche des äußeren Laufrings des Radlagers, an dem der erfindungsgemäße Radflansch mit seinem inneren Ringabschnitt befestigt wird, und von der Gestalt des inneren Ringabschnitts der Felge, mit dem das zu befestigende Rad zur Anlage an den äußeren Ringabschnitt des erfindungsgemäßen Radflansch kommt, ist es zweckmäßig, wenn der innere Ringabschnitt und der äußere Ringabschnitt in zueinander längs der zentralen Längsachse beabstandeten, normal zur zentralen Längsachse ausgerichteten Normalebenen angeordnet sind. Eine den im Bereich des jeweiligen Endabschnitts der Achse, an dem der Radflansch befestigt wird, jeweils optimal ausnutzende Gestaltung eines erfindungsgemäßen Radflansches ergibt sich dabei dann, wenn der Übergangsabschnitt, in an sich ebenfalls bekannter Weise, ausgehend vom inneren Umfangsrand des äußeren Ringabschnitts konisch bis zum um die zentrale Längsachse umlaufenden äußeren Umfangsrand des inneren Ringabschnitts sich verjüngend geformt ist.

Ein erfindungsgemäßer Radflansch zur Befestigung eines Rades an einer Nutzfahrzeugachse, an der er mittels eines Radlagers um seine zentrale Längsachse drehbar ist, weist somit einen äußeren Ringabschnitt mit Radschraubenöffnungen, einen inneren Ringabschnitt mit Radlagerschraubenöffnungen und einen mit Belüftungsöffnungen versehenen Übergangsabschnitt auf, der zwischen dem äußeren und dem inneren Ringabschnitt vorgesehen ist, wobei im Fall, dass die Anzahl der Radschraubenöffnungen größer als die oder gleich der Anzahl der Radlagerschraubenöffnungen ist, jeder Radlagerschraubenöffnung eine Radschraubenöffnung zugeordnet, und im Fall, dass die Anzahl der Radlagerschraubenöffnungen größer als die Anzahl der Radschraubenöffnungen ist, dagegen jeder Radschraubenöffnung eine Radlagerschraubenöffnung zugeordnet ist, wobei unabhängig davon, welcher Fall gegeben ist, die Mittelpunkte der einander jeweils zugeordneten Radlagerschraubenöffnungen und Radschraubenöffnungen jeweils gemeinsam auf einer gedachten, von der zentralen Längsachse ausgehenden Verbindungsgeraden angeordnet und die Belüftungsöffnungen jeweils in einem von zwei benachbarten Verbindungsgeraden begrenzten Bereich des Übergangsabschnitts angeordnet sind.

Mit der Erfindung ergibt sich eine Ausgestaltung eines Radflansches, bei der eine deutliche Vergrößerung der Belüftungsöffnungen und eine damit einhergehende deutliche Verbesserung der Belüftung des den Radflansch im Gebrauch tragenden Lagers sowie eine wirksame Reduzierung der Masse des Radflansches erzielt werden kann, ohne dass dazu das in der Praxis bewährte Grundkonzept eines derartigen Radflansches aufgegeben werden muss. Vielmehr lässt sich der erfindungsgemäße Radflansch ohne Weiteres mit den dem derzeit geltenden Standard entsprechenden Nutzfahrzeugrädern kombinieren, ohne dass dazu besondere Montagemittel oder desgleichen erforderlich wären.

Es versteht sich dabei von selbst, dass auch an einen erfindungsgemäßen Radflansch wie bei den konventionellen Radflanschen Bremsscheiben oder -trommeln angebunden werden können.

Nachfolgend wird die Erfindung anhand einer ein Ausführungsbeispiel darstellenden Zeichnung näher erläutert. Deren Figuren zeigen jeweils schematisch:
- Fig. 1: einen Radflansch in einer frontalen, in eine normal zu seiner Längsachse ausgerichteten Zeichenebene projizierten Ansicht seiner Außenseite;
- Fig. 2: den Radflansch in einer der Fig. 1 entsprechenden Ansicht seiner Rückseite;
- Fig. 3: den Radflansch gemäß den Figuren 1 und 2 in einem Schnitt entlang der in Fig. 1 eingezeichneten Schnittlinie X-X;

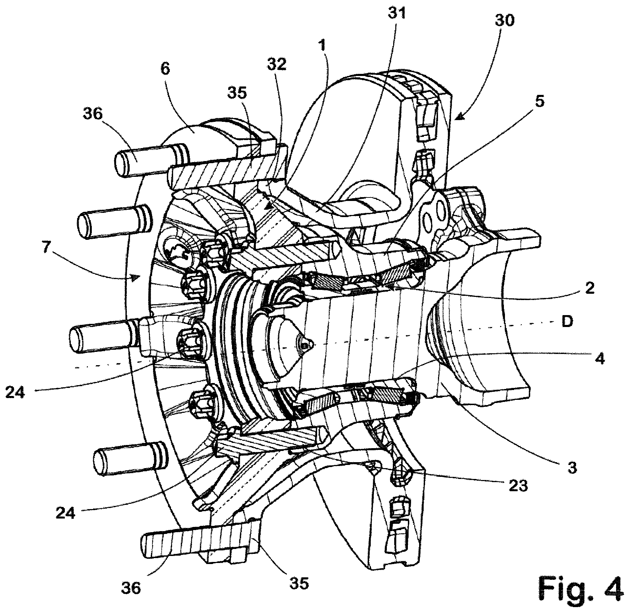

- Fig. 4: den Endabschnitt einer Nutzfahrzeugachse in einer perspektivischen, längs der Längsachse der Nutzfahrzeugachse geschnittenen Ansicht.

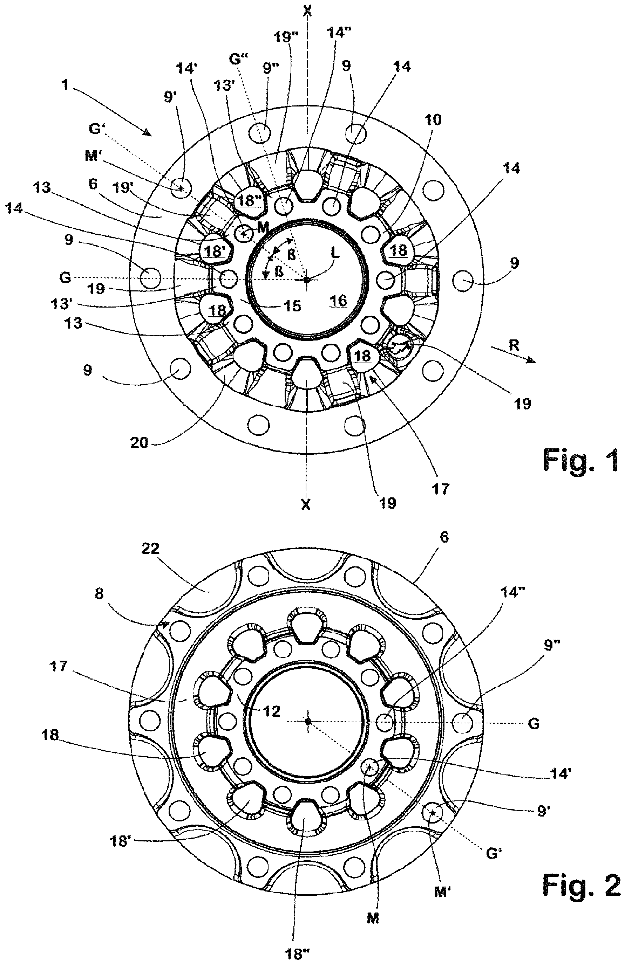

Der in den Figuren 1 - 3 dargestellte Radflansch 1 ist zur Montage an einem Radlager 2 vorgesehen, das als Teil einer an sich bekannten, beispielsweise in der oben bereits erwähnten DE 102 41 867 A1 beschriebenen Radnaben-Bremsscheibenanordnung auf einem als Achsstummel ausgebildeten Endabschnitt 3 einer hier weiter nicht dargestellten Achse eines hier ebenfalls nicht gezeigten Nutzfahrzeugs, beispielsweise eines Sattelaufliegers, gelagert ist. Dabei sitzt das Radlager 2 mit seinem inneren Laufring 4 auf dem endseitigen Zapfenabschnitt des Endabschnitts 3, so dass der äußere Laufring 5 des Radlagers 2 mit den an ihm befestigten Bauteilen um die durch das Radlager 2 definierte Drehachse D der Achse rotiert.

Der aus einem Metallwerkstoff, beispielsweise einem Stahlwerkstoff oder einem Eisengusswerkstoff gieß- oder schmiedetechnisch in einem Stück gefertigte Radflansch 1 weist eine zentrale Längsachse L auf, die, wenn der Radflansch 1 an der Achse montiert ist, mit der Drehachse D der Achse zusammenfällt.

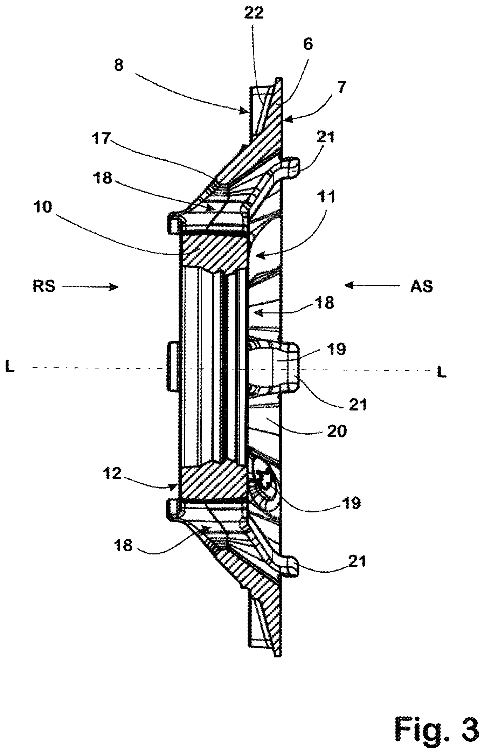

Um die zentrale Längsachse L läuft ein äußerer Ringabschnitt 6 des Radflansches 1 um, der nach Art einer Ringscheibe geformt ist, so dass seine vordere, der Außenseite AS des Radflansches 1 zugeordnete Stirnfläche 7 und seine der Rückseite RS des Radflansches 1 zugeordnete hintere Stirnfläche 8 jeweils in einer normal zur zentralen Längsachse L ausgerichteten Ebene liegen (Fig. 3).

In den äußeren Ringabschnitt 6 sind in gleichmäßigen Winkelabständen β um die zentrale Längsachse L verteilt, zehn Radschraubenöffnungen 9,9',9" eingeformt, die sich jeweils achsparallel zur zentralen Längsachse L erstrecken und jeweils von der vorderen Stirnfläche 7 zur hinteren Stirnfläche 8 des äußeren Ringabschnitts 6 führen.

Ebenso umfasst der Radflansch 1 einen inneren Ringabschnitt 10, der konzentrisch zum äußeren Radflansch 6 angeordnet ebenfalls um die zentrale Längsachse L umläuft. Auch der innere Ringabschnitt 10 ist nach Art einer Ringscheibe geformt, so dass seine vordere, der Außenseite AS zugeordnete Stirnfläche 11 und seine der Rückseite RS des Radflansches 1 zugeordnete hintere Stirnfläche 12 jeweils in normal zur zentralen Längsachse L ausgerichteten Ebenen liegen (Fig. 3). Dabei ist der innere Ringabschnitt 10 längs der zentralen Längsachse L versetzt in Bezug zum äußeren Ringabschnitt 6 angeordnet. Gleichzeitig ist der Innendurchmesser des äußeren Ringabschnitts 6 beispielsweise um etwa das 1,4-fache größer als der äußere Durchmesser des inneren Ringabschnitts 10.

An dem inneren Ringabschnitt 10 sind in gleichmäßigen Winkelabständen β um die zentrale Längsachse L verteilt in Bezug zu dieser radial nach außen vorstehende Vorsprünge 13,13' ausgebildet. In die Vorsprünge 13 ist jeweils eine von der vorderen Stirnfläche 11 zur hinteren Stirnfläche 12 des inneren Ringabschnitts 10 führende Radlagerschraubenöffnung 14,14',14" eingeformt, die sich achsparallel zur zentralen Längsachse L erstreckt. Dabei sind die Vorsprünge 13,13' mit ihrer jeweiligen Radlagerschraubenöffnung 14,14',14" jeweils so angeordnet, dass jeweils einer Radlagerschraubenöffnung 14,14',14" des inneren Ringabschnitts 10 eine der Radschraubenöffnung 9,9',9" des äußeren Ringabschnitts 6 zugeordnet ist, deren Mittelpunkte M,M' bei einer Projektion in eine Ebene, die normal zur zentralen Längsachse L ausgerichtet ist (Zeichenebene in den Figuren 1,2), gemeinsam mit der betreffenden Radlagerschraubenöffnung 14,14',14" auf einer Verbindungsgeraden G,G',G" liegen, welche die Längsachse L schneidet. Auf diese Weise sind die aus den einander zugeordneten Radlagerschraubenöffnungen 14,14',14" und Radschraubenöffnungen 9,9',9" gebildeten Paare von Radlagerschraubenöffnungen 14,14',14" und Radschraubenöffnungen 9,9',9" punktsymmetrisch in Bezug auf die zentrale Längsachse L angeordnet.

Jeweils zueinander benachbarte Vorsprünge 13,13' des inneren Ringabschnitts 10 sind über jeweils ein Ringsegment 15 des inneren Ringabschnitts 10 miteinander verbunden, dessen jeweils in radialer Richtung R gemessene Breite nicht mehr als die Hälfte der Breite der Vorsprünge beträgt.

Der innere Ringabschnitt 10 umgrenzt eine zentrale Öffnung 16 des Radflansches 1, über die bei an dem Radlager 2 montiertem Radflansch 1 beispielsweise ein Zugang zu den Wälzkörpern des Radlagers 2 möglich ist, um eine Wartung vorzunehmen.

Der äußere Ringabschnitt 6 ist an dem inneren Ringabschnitt 10 über einen Übergangsabschnitt 17 abgestützt, der ausgehend vom inneren Randbereich des äußeren Randabschnitts 6 sich konisch verjüngend bis zum äußeren Randbereich des inneren Ringabschnitts 10 verläuft. In den Übergangsabschnitt 17 sind in regelmäßigen Winkelabständen β zehn Belüftungsöffnungen 18,18`,18" eingeformt, die von der der Außenseite AS zugeordneten Vorderseite bis zur der Rückseite RS zugeordneten Rückseite des Übergangsabschnitts 17 führen. Die Belüftungsöffnungen 18,18',18" erstrecken sich dabei jeweils bis in den zwischen zwei benachbarten Vorsprüngen 13,13' begrenzten Raum und sind an ihrer der zentralen Längsachse L zugeordneten Seite jeweils durch das die betreffenden Vorsprünge 13,13' verbindende Ringsegment 15 des inneren Ringabschnitts 10 begrenzt. Ausgehend von dem betreffenden Ringabschnitt 10 erweitern sich die Belüftungsöffnungen 18,18',18" in Richtung des äußeren Ringabschnitts 6, so dass sie einen maximal großen Öffnungsquerschnitt besitzen.

Seitlich sind die Belüftungsöffnungen 18,18',18" jeweils durch eine sich in radialer Richtung R zwischen dem inneren Ringabschnitt 10 und dem äußeren Ringabschnitt 6 erstreckende Rippen 19,19',19" des Übergangsabschnitts 17 begrenzt. Die Rippen 19,19',19" gehen dabei jeweils von einem der Vorsprünge 13,13' aus und erstrecken sich bis in den an den äußeren Ringabschnitt 6 angrenzenden, um die zentrale Längsachse L umlaufenden Randbereich 20 des Übergangsabschnitts 17. Auf diese Weise sind die Belüftungsöffnungen 18,18',18" jeweils in einem von zwei benachbarten Verbindungsgeraden G,G',G" begrenzten Bereich des Übergangsabschnitts 17 angeordnet.

Am Übergang jeder zweiten Rippe 19,19" zum inneren Rand des äußeren Randabschnitts 20 ist an die betreffende Rippe 19,19" ein in axialer Richtung von der Außenseite AS vorstehender Zentriervorsprung 21 ausgeformt, der bei der Montage eines an dem Radflansch 1 zu befestigenden, hier nicht dargestellten Rades als Zentrierhilfe dient.

Zur weiteren Reduzierung der Masse des Radflansches 1 sind auf der Rückseite RS im Bereich des äußeren Ringabschnitts 6 jeweils zwischen den Bereichen, in denen die Radschraubenöffnungen 9,9',9" vorgesehen sind, ausgehend vom äußeren Rand des Ringabschnitts 6 in an sich bekannter Weise halbmondförmige Ausnehmungen 22 eingeformt.

Für die Montage des Radflansches 1 an dem Radlager 2 sind in die nach außen gerichtete, dem Radflansch 1 zugeordnete Stirnseite des äußeren Laufrings 5 des Radlagers 2 in gleichmäßigen Winkelabständen β um die Drehachse D verteilt Gewindeöffnungen 23 ausgebildet. Nachdem der Radflansch 1 an den Laufring 5 des Radlagers 2 angesetzt und ausgerichtet ist, werden von der Außenseite AS des Radflansches 1 her Radlagerschrauben 24 mit ihren Gewindeschäften durch die Radlagerschraubenöffnungen 14,14',14" des Radflansches 1 geführt und in die jeweils zugeordneten Gewindeöffnungen 23 geschraubt, bis der Kopf der jeweiligen Radlagerschraube 24 auf der vorderen Stirnfläche 11 des inneren Ringabschnitts 10 sitzt.

Der Radflansch 1 trägt dabei bereits eine in konventioneller Weise ausgebildete Bremsschreibe 30, deren Bremsscheibentopf 31 in an sich bekannter Weise (s. DE 102 41 867 A1) mit seinem stirnseitig umlaufenden Flansch 32 dicht an der hinteren, dem Radlager 2 zugeordneten Stirnfläche 8 des Radflansches 1 anliegt. In den Flansch 32 der Bremsscheibe 30 sind ebenfalls in den Winkelabständen β gleichmäßig verteilt zehn Durchgangsöffnungen eingeformt, die fluchtend zu den Radschraubenöffnungen 9,9',9" des Radflansches 1 ausgerichtet sind.

Bolzenartige Radschrauben 35 sind mit ihren Gewindeschäften 36 von der Rückseite RS des Radflansches 1 her durch die Durchgangsöffnung des Flansches 32 und die jeweils zugeordnete Radschraubenöffnung 9,9',9" geführt. Die Länge der Gewindeschäfte 36 der Radschrauben 35 ist dabei so bemessen, dass die Gewindeschäfte 36 bei fertig angeordneten Radschrauben 35 über die vordere Stirnfläche 7 des äußeren Ringabschnitts 6 in axialer Richtung vorstehen. Dabei sind die Abmessungen der Durchgangsöffnungen des Flansches 32 der Bremsscheibe 30 und der Radschraubenöffnungen 9,9',9" derart an die Abmessungen der Radschrauben 35 angepasst, dass die Radschrauben 35 form- und/oder kraftschlüssig in den betreffenden Durchgangsöffnungen und Radschraubenöffnungen 9,9',9" gehalten sind und ihre lagegerechte Ausrichtung gesichert ist.

Auf diese Weise kann in einem dem konventionellen Vorgehen entsprechenden Montagevorgang das an dem Radflansch 1 zu montierende Rad mit den an einem Innenrandabschnitt seiner hier nicht gezeigten Felge vorgesehenen, in gleicher Weise wie die Radschraubenöffnungen 9,9',9" angeordneten Öffnungen auf die von dem äußeren Ringabschnitt 6 vorstehenden Gewindeschäfte 36 der Radschrauben 35 aufgeschoben werden, bis die Felge mit ihrem inneren Rand auf den Zentriervorsprüngen 21 sitzt. Anschließend werden von der Außenseite her Muttern auf die nun durch die Öffnungen des Innenrandabschnitts der Felge greifenden Gewindeschäfte 36 der Radschrauben 35 geschraubt, um das Rad fest an dem Radflansch 1 zu halten.

### BEZUGSZEICHEN

- 1: Radflansch
- 2: Radlager
- 3: Endabschnitt einer Achse für ein Nutzfahrzeug
- 4: innerer Laufring des Radlagers 2
- 5: äußerer Laufring des Radlagers 2
- 6: äußerer Ringabschnitt des Radflansches 1
- 7: vordere Stirnfläche des äußeren Ringabschnitts 6
- 8: hintere Stirnfläche des äußeren Ringabschnitts 6
- 9,9',9": Radschraubenöffnungen des äußeren Ringabschnitts 6
- 10: innerer Ringabschnitt des Radflansches 1
- 11: vordere Stirnfläche des inneren Ringabschnitts 10
- 12: hintere Stirnfläche des inneren Ringabschnitts 10
- 13,13': Vorsprünge des inneren Radabschnitts 10
- 14,14', 14": Radlagerschraubenöffnungen
- 15: Ringsegmente des inneren Ringabschnitts 10
- 16: zentrale Öffnung des Radflansches 1
- 17: Übergangsabschnitt des Radflansches 1
- 18,18',18": Belüftungsöffnungen
- 19,19',19": Rippen des Übergangsabschnitts 17
- 20: Randbereich des Übergangsabschnitts 17
- 21: Zentriervorsprung
- 22: Ausnehmungen an der Rückseite RS des äußeren Ringabschnitts 6
- 23: Gewindeöffnungen des äußeren Laufrings 5 des Radlagers 2
- 24: Radlagerschrauben
- 30: Bremsschreibe
- 31: Bremsscheibentopf
- 32: Flansch
- 35: Radschrauben
- 36: Gewindeschäfte

- ß: Winkelabstände
- AS: Außenseite des Radflansches 1
- D: Drehachse der Achse
- G,G',G": Verbindungsgeraden
- L: zentrale Längsachse des Radflansches 1
- M: Mittelpunkte der Radschraubenöffnungen 9,9',9"
- M': Mittelpunkte der Radlagerschraubenöffnungen 14,14',14"
- R: radiale Richtung
- RS: Rückseite des Radflansches 1

## Patentansprüche

1. Radflansch zur Befestigung eines Rades an einer Nutzfahrzeugachse, an der der Radflansch (1) im Gebrauch mittels eines Radlagers (2) um eine Drehachse (D) drehbar gelagert ist, die mit der zentralen Längsachse (L) des Radflansches (1) zusammenfällt, wobei der Radflansch (1)
- einen um die zentrale Längsachse (L) umlaufenden, an den äußeren Umfang des Radflansches (1) angrenzenden äußeren Ringabschnitt (6), in den sich längs der zentralen Längsachse (L) erstreckende Radschraubenöffnungen (9,9',9") eingeformt sind,
- einen um die zentrale Längsachse (L) umlaufenden inneren Ringabschnitt (10), dessen Durchmesser kleiner ist als der Durchmesser des äußeren Ringabschnitts (6) und in den sich längs der zentralen Längsachse (L) erstreckende Radlagerschraubenöffnungen (14,14',14") eingeformt sind,
und
- einen um die zentrale Längsachse (L) umlaufenden Übergangsabschnitt (17) aufweist, der sich zwischen dem äußeren Ringabschnitt (6) und dem inneren Ringabschnitt (10) erstreckt und in den sich längs der zentralen Längsachse (L) erstreckende Belüftungsöffnungen (18,18',18") eingeformt sind,
**dadurch gekennzeichnet, dass**
in einer Projektion auf eine normal zur zentralen Längsachse (L) ausgerichteten Ebene
- im Fall, dass die Anzahl der Radschraubenöffnungen (9,9',9") größer als die oder gleich der Anzahl der Radlagerschraubenöffnungen (14,14',14") ist, jeder Radlagerschraubenöffnung (14,14`,14") eine Radschraubenöffnung (9,9',9") zugeordnet ist und die Mittelpunkte (M,M') der einander zugeordneten Radlagerschraubenöffnungen (14,14',14") und Radschraubenöffnungen (9,9',9") gemeinsam auf einer gedachten, von der zentralen Längsachse (L) ausgehenden Verbindungsgeraden (G,G',G") angeordnet sind,
- im Fall, dass die Anzahl der Radlagerschraubenöffnungen (14,14',14") größer als die Anzahl der Radschraubenöffnungen (9,9',9") ist, jeder Radschraubenöffnung (9,9',9") eine Radlagerschraubenöffnung (14,14',14") zugeordnet ist und die Mittelpunkte (M,M') der einander zugeordneten Radlagerschraubenöffnungen (14,14',14") und Radschraubenöffnungen (9,9',9") gemeinsam auf einer gedachten, von der zentralen Längsachse (L) ausgehenden Verbindungsgeraden (G,G',G") angeordnet sind,
und
- die Belüftungsöffnungen (18,18',18") jeweils in einem von zwei benachbarten Verbindungsgeraden (G,G',G") begrenzten Bereich des Übergangsabschnitts (17) angeordnet sind.

2. Radflansch nach Anspruch 1, **dadurch gekennzeichnet, dass** die Radschraubenöffnungen (9,9',9") in gleichmäßigen Winkelabständen (β) um die zentrale Längsachse (L) verteilt angeordnet sind.

3. Radflansch nach einem der voranstehenden Ansprüche, **dadurch gekennzeichnet, dass** die Radlagerschraubenöffnungen (14,14`,14") in gleichmäßigen Winkelabständen (β) um die zentrale Längsachse (L) verteilt angeordnet sind.

4. Radflansch nach einem der voranstehenden Ansprüche, **dadurch gekennzeichnet, dass** der innere Ringabschnitt (10) bezogen auf die zentrale Längsachse (L) radial in Richtung des äußeren Ringabschnitts (6) ausgesetzte Vorsprünge (13,13') aufweist, in deren Bereich jeweils eine der Radlagerschraubenöffnungen (14,14`,14") eingeformt ist.

5. Radflansch nach Anspruch 4, **dadurch gekennzeichnet, dass** die Belüftungsöffnungen (18,18', 18") sich jeweils bis in den zwischen den Vorsprüngen (13,13') begrenzten Bereich des Übergangsabschnitts (17) erstrecken.

6. Radflansch nach einem der Ansprüche 4 oder 5, **dadurch gekennzeichnet, dass** die Vorsprünge (13,13') durch das dem inneren Ringabschnitt (10) zugeordnete Ende von jeweils einer Rippe (19,19',19") gebildet sind, die sich über den Übergangsabschnitt (17) bis zum äußeren Ringabschnitt (6) erstreckt.

7. Radflansch nach einem der voranstehenden Ansprüche, **dadurch gekennzeichnet, dass** der innere Ringabschnitt (10) eine sich längs der zentralen Längsachse (L) erstreckende zentrale Öffnung (16) des Radflansches (1) umgrenzt.

8. Radflansch nach einem der voranstehenden Ansprüche, **dadurch gekennzeichnet, dass** am inneren um die zentrale Längsachse (L) umlaufenden Umfangsrand des äußeren Ringabschnitts (6) längs der zentralen Längsachse (L) sich erstreckende Zentriervorsprünge (21) ausgebildet sind, die als Ausrichthilfen für die Montage des Rads an dem Radflansch (1) vorgesehen sind.

9. Radflansch nach einem der voranstehenden Ansprüche, **dadurch gekennzeichnet, dass** der innere Ringabschnitt (10) und der äußere Ringabschnitt (6) in zueinander längs der zentralen Längsachse (L) beabstandeten, normal zur zentralen Längsachse (L) ausgerichteten Ebenen angeordnet sind.

10. Radflansch nach Anspruch **9,dadurch gekennzeichnet, dass** der Übergangsabschnitt (17) ausgehend vom inneren Umfangsrand des äußeren Ringabschnitts (6) konisch bis zum um die zentrale Längsachse (L) umlaufenden äußeren Umfangsrand des inneren Ringabschnitts (10) sich verjüngend geformt ist.

11. Achse für ein Nutzfahrzeug, wobei auf einem Endabschnitt der Achse ein Radlager (2) sitzt, mit dessen äußerem Laufring (5) ein gemäß einem der voranstehenden Ansprüche ausgebildeter Radflansch (1) mittels Radlagerverschraubungen (24) befestigt ist, von denen jeweils eine durch eine der Radlagerschraubenöffnungen (14,14',14") des Radflansches (1) geführt ist, so dass der Radflansch (1) an der Achse um eine mit seiner zentralen Längsachse (L) zusammenfallenden Drehachse (D) drehbar gelagert ist.

## Claims

1. Wheel flange for fastening of a wheel to a utility vehicle axle, on which, in use, the wheel flange (1) is mounted rotatably about an axis of rotation (D) by means of a wheel bearing (2) which coincides with the central longitudinal axis (L) of the wheel flange (1), wherein the wheel flange (1) has
- an outer annular section (6) positioned around the central longitudinal axis (L) and abutting the outer circumference of the wheel flange (1), into which wheel bolt openings (9, 9', 9") extending along the central longitudinal axis (L) are formed,
- an inner ring section (10) positioned around the central longitudinal axis (L), the diameter of which is smaller than the diameter of the outer ring section (6) and into which wheel bearing bolt openings (14, 14', 14") extending along the central longitudinal axis (L) are formed,
and
- a transition section (17) positioned around the central longitudinal axis (L), which extends between the outer ring section (6) and the inner ring section (10) and into which ventilation openings (18, 18', 18") extending along the central longitudinal axis (L) are formed,
**characterized in that**
in a projection onto a plane aligned perpendicularly to the central longitudinal axis (L),
- in case that the number of wheel bolt openings (9,9',9") is greater than or equal to the number of wheel bearing bolt openings (14,14',14"), to each wheel bearing bolt opening (14,14',14"), a wheel bolt opening (9,9',9") is assigned and the centers (M,M') of the assigned wheel bolt openings (9,9',9") and wheel bearing bolt openings (14,14',14") "are arranged jointly on an imaginary straight connecting line (G,G',G") extending from the central longitudinal axis (L),
- in case the number of wheel bearing bolt openings (14,14',14") is greater than the number of wheel bolt openings (9,9',9"), to each wheel bolt opening (9,9',9"), a wheel bearing bolt opening (14,14',14") is assigned and the center points (M,M') of the assigned wheel bearing bolt openings (14,14',14") and wheel bolt openings (9,9',9") are arranged together on an imaginary straight connecting line (G,G',G") extending from the central longitudinal axis (L), and
- the ventilation openings (18,18',18") are each arranged in an area of the transition section (17) bounded by two adjacent straight connecting lines (G,G',G").

2. Wheel flange according to claim 1, **characterized in that** the wheel bolt openings (9, 9',9") are arranged at uniform angular spacings (β) around the central longitudinal axis (L).

3. Wheel flange according to one of the preceding claims,
**characterized in that** the wheel bearing bolt openings (14,14',14") are arranged at uniform angular spacings (β) around the central longitudinal axis (L).

4. Wheel flange according to one of the preceding claims,
**characterized in that** the inner ring section (10) has projections (13,13') projecting radially in the direction of the outer ring section (6) relative to the central longitudinal axis (L) and into the region of which one of the wheel bearing bolt openings (14,14,14") is formed, respectively.

5. Wheel flange according to claim 4, **characterized in that** the ventilation openings (18,18',18") respectively extend into the region of the transition section (17) delimited between the projections (13,13').

6. Wheel flange according to one of claims 4 or 5,
**characterized in that** the projections (13, 13') are each formed by the end of a rib (19, 19', 19") assigned to the inner ring section (10), wherein the rib extends over the transition section (17) up to the outer ring section (6).

7. Wheel flange according to one of the preceding claims,
**characterized in that** the inner ring section (10) delimits a central opening (16) of the wheel flange (1) extending along the central longitudinal axis (L).

8. Wheel flange according to one of the preceding claims,
**characterized in that** centering projections (21) are formed which extend along the central longitudinal axis (L) on the inner circumferential edge of the outer ring section (6) positioned around the central longitudinal axis (L), wherein the centering projections (21) are provided as alignment aids for mounting the wheel on the wheel flange (1).

9. Wheel flange according to one of the preceding claims,
**characterized in that** the inner ring section (10) and the outer ring section (6) are arranged in planes spaced apart from one another along the central longitudinal axis (L) and aligned perpendicularly to the central longitudinal axis (L).

10. Wheel flange according to claim 9, **characterized in that** the transition section (17) is tapered conically from the inner circumferential edge of the outer ring section (6) to the outer circumferential edge of the inner ring section (10) positioned around the central longitudinal axis (L).

11. Axle for a utility vehicle, wherein a wheel bearing (2) is positioned on an end portion of the axle, to an outer race (5) of which a wheel flange (1) formed in accordance with one of the preceding claims is fastened by means of wheel bearing screw connections (24), of which a respective one is guided respectively through one of the wheel bearing screw openings (14,14',14") of the wheel flange (1), so that the wheel flange (1) is mounted on the axle rotatably about an axis of rotation (D) coinciding with its central longitudinal axis (L).

## Revendications

1. Bride de roue pour fixer une roue sur un essieu de véhicule utilitaire, sur lequel, lors de l'utilisation, le bride de roue (1) est monté au moyen d'un palier de roue (2), de manière tournable autour d'un axe de rotation (D) qui coïncide avec l'axe longitudinal central (L) du bride de roue (1), où le bride de roue (1) a
- une section annulaire extérieure (6) positionnée autour de l'axe longitudinal central (L) et adjacente à la périphérie extérieure du bride de roue (1), dans laquelle sont formées des ouvertures de vis de roue (9,9', 9") s'étendant le long de l'axe longitudinal central (L),
- une section annulaire intérieure (10) positionnée autour de l'axe longitudinal central (L), dont le diamètre est inférieur au diamètre de la section annulaire extérieure (6) et dans laquelle sont formées des ouvertures de vis de palier de roue (14, 14', 14") s'étendant le long de l'axe longitudinal central (L),
et
- une section de transition (17) positionnée autour de l'axe longitudinal central (L), qui s'étend entre la section annulaire extérieure (6) et la section annulaire intérieure (10) et dans laquelle sont formées des ouvertures d'aération (18, 18', 18") s'étendant le long de l'axe longitudinal central (L),
**caractérisé en ce que**
dans une projection sur un plan orienté perpendiculairement à l'axe longitudinal central (L),
dans le cas où le nombre d'ouvertures de vis de roue (9, 9',9") est supérieur ou égal au nombre d'ouvertures de vis de palier de roue (14,14',14"), à chaque ouverture de vis de palier de roue (14, 14',14") une ouverture de vis de roue (9, 9', 9") est assigné et les centres (M, M') des ouvertures de vis de palier de roue (14, 14',14") et des ouvertures de vis de roue (9, 9', 9") assignées sont disposés ensemble sur une droite de liaison imaginaire (G, G', G") partant de l'axe longitudinal central (L),
- dans le cas où le nombre d'ouvertures de vis de palier de roue (14, 14',14") est supérieur au nombre d'ouvertures de vis de roue (9, 9',9"), à chaque ouverture de vis de roue (9, 9',9"), une ouverture de vis de palier de roue (14, 14',14") est asssigné et les points centraux (M,M') des ouvertures de vis de palier de roue (14, 14',14") et des ouvertures de vis de roue (9, 9',9") assignées les unes aux autres sont disposées ensemble sur une droite de liaison imaginaire (G, G', G") partant de l'axe longitudinal central (L),
et
les ouvertures d'aération (18, 18',18") sont disposées respectivement dans une zone du section de transition (17) délimitée par deux droites de liaison voisines (G, G', G").

2. Bride de roue selon la revendication 1, **caractérisé en ce que** les ouvertures de vis de roue (9, 9',9") sont réparties à des distances angulaires régulières (β) autour de l'axe longitudinal central (L).

3. Bride de roue selon l'une des revendications précédentes,
**caractérisé en ce que** les ouvertures de vis de palier de roue (14, 14, 14") sont réparties à des distances angulaires (β) régulières autour de l'axe longitudinal central (L).

4. Bride de roue selon l'une des revendications précédentes,
**caractérisé en ce que** la section annulaire intérieure (10) a, par rapport à l'axe longitudinal central (L), des saillies (13, 13') faisant saillie radialement en direction de la section annulaire extérieure (6), dans la zone desquelles est formée respectivement l'une des ouvertures de vis de palier de roue (14, 14, 14").

5. Bride de roue selon la revendication 4, **caractérisé en ce que** les ouvertures d'aération (18, 18', 18") s'étendent respectivement jusque dans la zone de la section de transition (17) délimitée entre les saillies (13, 13').

6. Bride de roue selon l'une des revendications 4 ou 5, **caractérisé en ce que** les saillies (13, 13') sont formées par l'extrémité de une nervure (19, 19', 19") respective associée à la section annulaire intérieure (10) qui s'étend sur la section de transition (17) jusqu'à la section annulaire extérieure (6).

7. Bride de roue selon l'une des revendications précédentes,
**caractérisé en ce que** la partie annulaire intérieure (10) délimite une ouverture centrale (16) du bride de roue (1) s'étendant le long de l'axe longitudinal central (L).

8. Bride de roue selon l'une des revendications précédentes,
**caractérisé en ce que** des saillies de centrage (21) positionnée le long de l'axe longitudinal central (L) sont formées sur le bord périphérique intérieur de la section annulaire extérieure (6), qui positionnée autour de l'axe longitudinal central (L), qui sont prévues comme aides d'alignement pour le montage de la roue sur le bride de roue (1).

9. Bride de roue selon l'une des revendications précédentes,
**caractérisé en ce que** la section annulaire intérieure (10) et la section annulaire extérieure (6) sont disposées dans des plans espacés l'un de l'autre le long de l'axe longitudinal central (L) et orientés perpendiculairement à l'axe longitudinal central (L).

10. Bride de roue selon la revendication 9, **caractérisé en ce que** la section de transition (17) est formée de manière rajeunissant coniquement en partant du bord périphérique intérieur de la section annulaire extérieure (6) jusqu'au bord périphérique extérieur de la section annulaire intérieure (10) positionnée autour de l'axe longitudinal central (L).

11. Essieu pour un véhicule utilitaire, où un palier de roue (2) est monté sur une section d'extrémité de l'essieu, avec la bague de palier extérieure (5) duquel un bride de roue (1) selon l'une des revendications précédentes est fixé au moyen de vissages de palier de roue (24), dont l'un est guidé respectivement à travers l'une des ouvertures de vis de palier de roue (14, 14', 14") du bride de roue (1), de sorte que le bride de roue (1) est monté sur l'essieu de manière tournable autour d'un axe de rotation (D) qui coïncide avec son axe longitudinal central (L).
